# EUROPEAN PATENT APPLICATION

(11) **EP 1 169 917 A1**
(43) Date of publication of application: **09.01.2002**
(21) Application number: 00202156.6
(22) Date of filing: 20.06.2000
(51) Int. Cl.: A01K 29/00

(54) **Method and apparatus for determining animal movements**

(71) Applicant: Stichting Dienst Landbouwkundig Onderzoek, 6708 PD Wageningen (NL)
(72) Inventor: Hopster, Herman, 3882 RX Putten (NL)
(74) Representative: Prins, Adrianus Willem

(57) **Abstract**

Method for determining animal movements within an apparatus for keeping animals, wherein at least a number of animals are provided with a transmission means such as an active or passive transponder, wherein in the apparatus a number of antennae are arranged at a number of animal-keeping positions, sensitive to the transmission means, while preferably, a number of movement detection means are moreover arranged at said animal-keeping positions and the antennae and possibly the movement detection means are coupled to a calculating unit, movements of animals at least in the animal-keeping positions being registered by means of cooperating antennae and transmission means and possibly the movement detection means, while on the basis of the signals thus generated, at least movement patterns of the animals relative to the animal-keeping positions are registered.

## Description

The invention relates to a method for determining animal movements. In particular, the invention relates to such method wherein at least movement patterns of animals can be registered and analyzed.

From practice, it is known that animals within apparatus in which they are kept, such as stables, exhibit movement patterns which seem to be dependent on, inter alia, the arrangement of animal-keeping positions such as lying boxes within the apparatus. In that respect, for instance the positions thereof relative to each other, to the feeding and drinking places and doors, windows and (mechanical) ventilation means appear to be important. However, hitherto there has been no possibility of automatically registering and analyzing these movements of animals during some time. Such registration and analysis seems to be of great importance for, for instance, optimizing the layout of such apparatus and the health condition of the animals to be realized therewith, physically as well as psychically.

Hence, the object of the invention is to provide a method of the type described in the preamble, wherein during some time, at least movements and preferably movements and positions of animals in the apparatus can be registered. In particular, the object of the invention is to provide such method wherein, during said time, the movements and possibly movements and positions of the animals are recorded for analysis, without necessitating the constant presence of humans. To that end, a method according to the invention is characterized by the features of claim 1.

With such method, the movement pattern of, or at least the use of the animal-keeping positions within an animal-keeping apparatus by animals can be recorded and analyzed. The data thus obtained can, for instance, be used for optimizing the layout of such animal-keeping apparatus, for optimizing feeding, tending and housing, for interfering with the behavior of the relevant animals, for further inspection of the health of one or more of the relevant animals, and the like. The use of transmission means and antennae adjusted thereto offers the advantage that the animals, during recording of the data, are substantially not hindered and can move freely through the animal-keeping apparatus, while this method is particularly little labor-intensive. Indeed, the data can be collected and processed automatically, if so desired.

Preferably, in a method according to the invention, movements of the animals into and out of the animal-keeping positions and their presence therein are at least substantially registered by the transmission means and the antennae, while the movements of the animals within the animal-keeping positions are at least substantially registered by means of the movement detection means, if installed. This enables the use of relatively simple transmission means and antennae, for instance cooperating coils. Moreover, possible mistakes, which may for instance be caused by interaction between a transmission means and an antenna of an animal-keeping position next to the one in which the relevant animal with the transmission means is located, can thus be avoided even more effectively.

In an advantageous further elaboration, a method according to the invention is further characterized by the features of claim 14.

With the data obtained with a method according to the invention, the layout of an animal-keeping apparatus can be optimized in a relatively simple manner, for instance on the basis of the average occupation of each of the animal-keeping positions relative to that of the other animal-keeping positions. Preferably, an average occupation which is approximately equal for each of the animal-keeping positions is aimed at. However, it is for instance also possible to take into account preferences of individual animals.

The invention further relates to an apparatus for keeping animals, characterized by the features of claim 8.

Such apparatus is in particular suitable for using a method according to the invention.

An apparatus according to the invention offers the advantage that various, preferably all animals can be provided with a transmission means capable of cooperating with the or each antenna in the animal-keeping apparatus. Such animal-keeping apparatus is, for instance, a loose house with lying boxes. In such loose house, preferably each lying box is then provided with at least one antenna, such that the presence and identity of an animal in the relevant animal-keeping position, in particular the lying box, can be determined and recorded at any desired moment. Moreover, movements and actions can readily be recorded.

In this specification, 'transmission means' should at least be understood to include transponders, active as well as passive, periodically or permanently transmitting transmitters, optical and acoustic means, and the like. In this specification, 'antenna' should at least be understood to include coils arranged for registering movements of other coils such as transponders relative thereto, as well as antennae arranged for registering radiowaves and the like.

Preferably, use is made of active transponders, in particular transponders whereby the animals provided therewith are individually recognizable and which function on the basis of, for instance, a magnetic field generated by the antennae. Such transponders are generally known from cattle farming.

In a particularly advantageous embodiment, an apparatus according to the invention is further characterized by the features of claim 12.

Through coupling of the or each antenna to a calculating unit, the possibility of processing the collected data is simply obtained. In an algorithm according to the invention, these data can be processed, for instance to enable analyzing the movement patterns of the animals in the relevant animal-keeping apparatus therefrom, and possibly to enable optimization of the layout. Also, for instance the movements of individual animals during the time can thereby be used for monitoring the health condition of the relevant animal, or for instance a moment of giving birth can be noted remotely. For that matter, it will be understood that the data can also be collected and entered into a like algorithm in a different manner, for instance via memory means which can be read out in the algorithm.

In a further advantageous embodiment, an apparatus according to the invention is further characterized by the features of claim 15.

By providing at least one and preferably at least two detection means at some distance above the floor of the animal-keeping position, movements of the animals within the relevant animal-keeping position can be registered, for instance when in said animal-keeping position, an animal moves from a standing into a lying position or the other way round. From such information, for instance the mood of the relevant animal can be noted and, possibly, a check on the signals coming from the transmission means and vice versa can be obtained. Preferably, a first movement detection means is provided adjacent an inlet of an animal-keeping position, at a first height, and a second movement detection means is provided at a distance from said inlet, at a second height different from the first height. As movement detection means, optical switches can for instance be used, but mechanical detection means are also suitable for such application, for instance pressure switches. Further, ultrasonic, infrared and like means can for instance be used.

The invention further relates to an assembly according to claim 18.

With such assembly, an animal-keeping apparatus can readily be arranged for registering animal movements and positions, for instance to enable optimization of the layout in an existing stable.

In the further subclaims, further advantageous embodiments of a method, apparatus and assembly according to the invention are given.

To clarify the invention, exemplary embodiments of a method, apparatus and assembly according to the invention will hereinafter be specified with reference to the accompanying drawings. In these drawings:
Fig. 1 is a schematic top plan view of the layout of an animal-raising apparatus, in particular a loose house for cows;
Fig. 2 is a schematic, perspective view of an animal-keeping position in the form of a lying box according to the invention, with associated calculating unit;
Figs. 3A-D show, for four lying boxes, the registration of periods of an animal lying therein, over a period of 26 days;
Figs. 4A-D graphically represent, during the same period, when specific animals, in particular cows, lie in one of the lying boxes;
Fig. 5 graphically represents, for one day, expressed in percentage of the number of animals, the number of animals lying in one of the lying boxes at any moment; and
Fig. 6 schematically represents an assembly of a mat with antenna, ear mark, movement detection means and a calculating unit for use with a method according to the present invention.

In this specification, identical or corresponding parts have identical or corresponding reference numerals. To illustrate the invention, as animal-keeping apparatus, there is shown a loose house with lying boxes for keeping cows. However, it will be understood that in the same or a comparable manner, other animal-keeping apparatus for other animals can be designed, for instance houses for poultry, with antennae and detection means provided at laying or breeding places or at farrowing places for, for instance, sows, or stables for animals in zoos. Many comparable applications will readily occur to anyone skilled in the art. In this specification, identical or corresponding parts have identical or corresponding reference numerals.

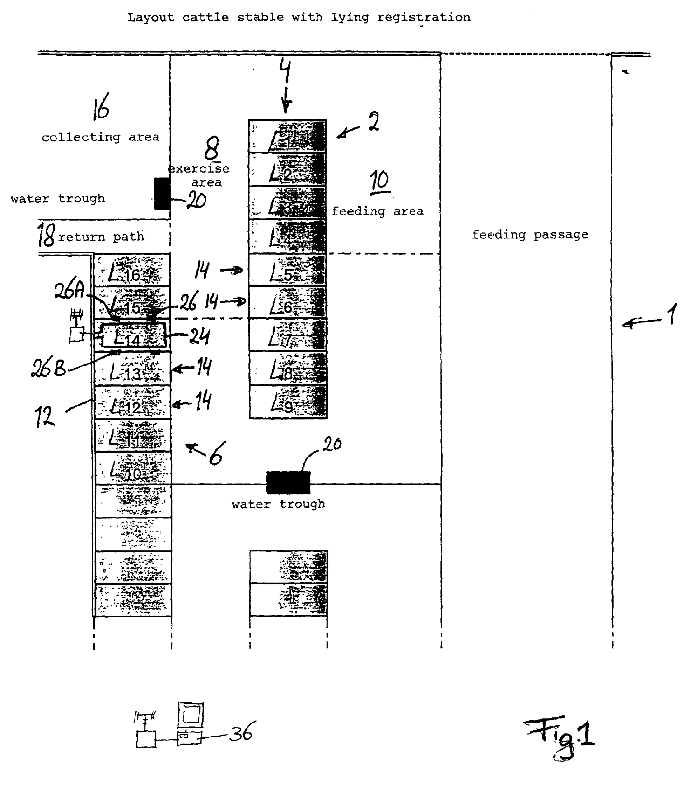

Fig. 1 schematically shows, in top plan view, a loose house 1 for keeping cows, comprising a series of lying boxes 2, numbered L₁-L₁₆. In the embodiment shown, nine lying boxes 2 (L₁-L₉) are arranged in a first series 4, while the other lying boxes (L₁₀-L₁₆) are arranged in a second series 6. The first series 4 comprises a series of connected lying boxes 2 and is surrounded on all sides by a free space. This free space is defined on a first side by an exercise area 8 and on the opposite side of the lying boxes 2 by a feeding area 10. The second series 6 is arranged along a wall 12 and likewise comprises a number of lying boxes 2 whose longitudinal sides are placed against one another. On the side facing away from the wall 12, each of the lying boxes 2 in the second series 6 has an inlet 14. For the lying boxes 2 in the first series 4, the inlet 14 is located on the side of the exercise area 8. Cows can enter and leave the lying boxes via the inlet 14 only. Provided next to the exercise area 8 is a collecting area 16 where the cows can wait, for instance before milking. Provided between the collecting area 16 and the last lying box L₁₆ in the second series 6 is a return path 18 through which the cows can return to the exercise area 8 from the collecting area 16, via for instance a milking apparatus (not shown). At different positions, water troughs 20 are provided.

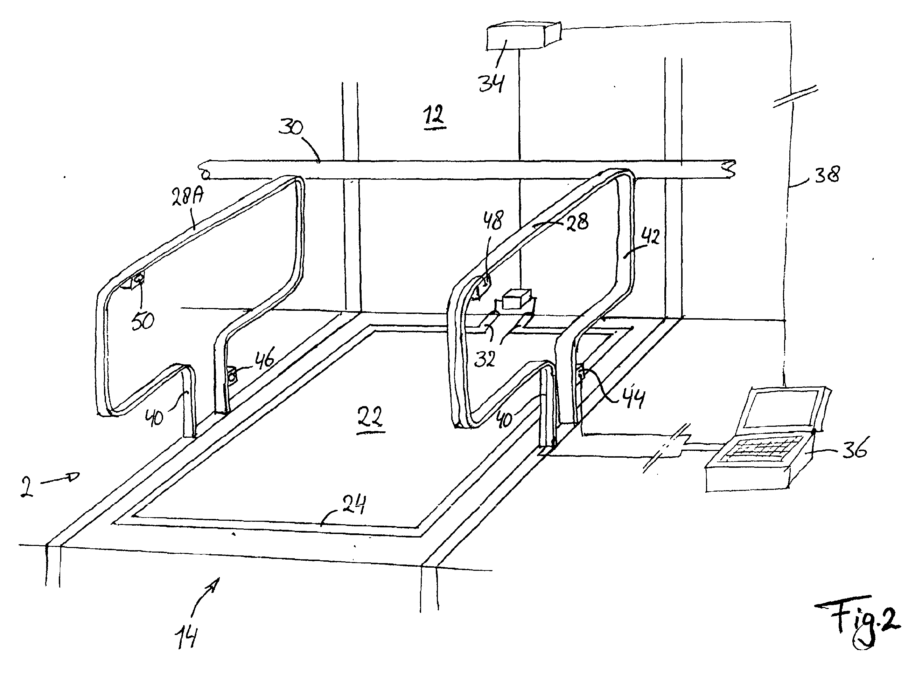

Each of the lying boxes 2 (L₁-L₁₆) is substantially designed as schematically shown in Fig. 2. Each lying box 2 comprises an antenna 24 provided on the floor 22, in the form of a detection loop suitable for at least periodically generating a magnetic field, as drawn in schematically in the lying box L₁₄, and two sets of movement detection means 26, consisting of, for instance, a light source 26A and a reflector 26B. The purpose hereof will be discussed in more detail hereinbelow.

Fig. 2 is a schematic and perspective view of a lying box 2 according to the invention. This lying box 2 has a floor 22 having a crush barrier 28 on either side. On the front side, an inlet 14 is defined, on the opposite rear side the wall 12 is visible. It will be understood that when this concerns a lying box 2 from the first series 4, the wall 12 is not present. Adjacent the wall 12, the crush barriers 28 are interconnected by a cross bar 30 whereby the space available to the cow within the lying box 2 is limited. Such lying box 2 is generally known per se.

According to the invention, an antenna 24 in the form of a detection loop is provided on the floor 22 of the lying box 2. This antenna 24 is formed from, for instance, a metal strip defining a rectangle and comprising, adjacent the wall 12, two connecting strips 32. The strip defining the antenna 24 extends at a relatively short distance from the longitudinal sides of the lying box 2, to enclose a relatively large area within the detection loop 24 relative to the outer sizes of the lying box 2. Via the strips 32, the antenna-forming detection loop 24 is connected to a coupling case 34 which is in turn connected to a calculating unit 36. This coupling can be directly effected by means of a cable 38, yet the coupling case 34 can, for instance, also be provided with transmission and receiving means such as radio means, for communication with the calculating unit 36. Such coupling of an antenna 24 to a calculating unit 36 is generally known per se.

In the exemplary embodiment shown, each crush barrier 28 is bent from a metal section, to form a loop 42 supported by two relatively closely spaced apart legs 40. On the crush barrier 28 shown on the right-hand side in Fig. 2, the rearmost leg 40 mounts a first light source 44, capable of transmitting a beam of light in the direction of the opposite crush barrier 28A. The leg 40 of said opposite crush barrier 28A mounts a reflector 46, opposite the light source 44, capable of reflecting a beam of light transmitted by a light source 44, such that it can be received by a light sensor adjacent or in the light source 44. This means that when an object such as an animal is situated or moves between the light source 44 and the reflector 46, the beam of light will be interrupted at least temporarily, which will be detected by the light sensor. Adjacent the inlet 14, on each loop 42 adjacent the top side thereof, there are provided a comparable light source 48 and reflector 50 respectively. To this pair of movement detection means 26, too, it applies that when an object such as an animal is located or moves between reflector 50 and light source 48, the beam of light will be interrupted at least temporarily, which will be registered. This registration preferably takes place by means of the calculating unit 36 to which the light sources 44, at least the light sensors, are coupled, as is the antenna 24.

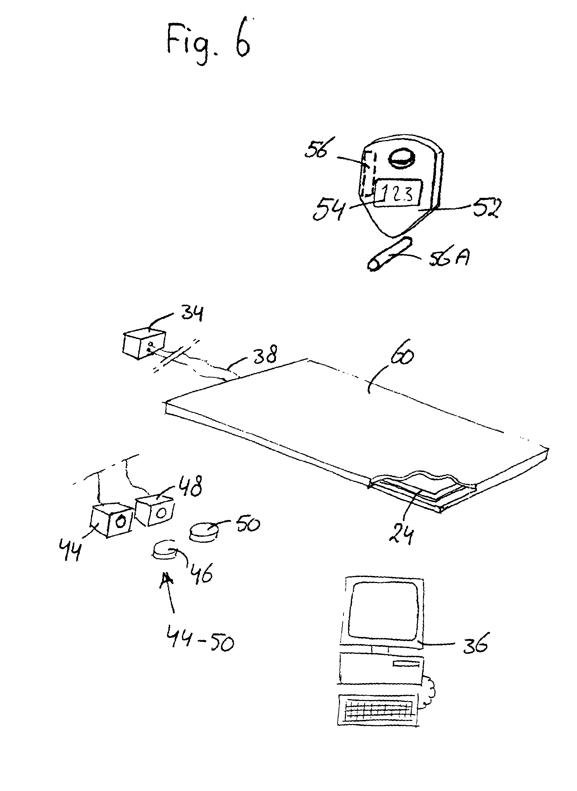

A loose house 1, at least a lying box 2 according to Figs. 1 and 2, can be used as follows. One or more of the cows (not shown) to be kept in the loose house 1 is fitted with an identification means in the form of an element to be referred to as 'transmission means', for instance a transponder. In Fig. 6, as such transmission means, a neck transponder 52 is shown, as is often used in cattle farming, which neck transponder 52 has been individualized for a specific animal. To that end, the neck transponder 52 is, for instance, provided with a specific number 54 and an active transponder 56. In this context, 'active transponder' should at least be understood to include a transponder which, when brought within the range of a suitable magnetic field of, for instance, the antenna 24, provides a signal whereby the transponder 56 is identifiable. However, other transmission means may be used as well, for instance a passive transponder, whereby or of from which, in principle, only the presence can be determined, or a radio transmitter can for instance be used. However, an active transponder 56 has the advantage that it can be of a particularly small and robust design, that it is commonly used in cattle farming and that the animals can be individualized therewith particularly effectively. Moreover, when an ear mark 52 with such transponder is used, a check can take place in a simple manner, for instance visually.

Each of the transponders of the cows present in the relevant loose house is detectable by means of the antennae 24 on the floors 22 of the lying boxes 2, when, viewed vertically, the transponder 56 is located at least substantially within the detection loop 24. Accordingly, a signal provided by the transponder 56 is received by the antenna 24 and passed on to the calculating unit 36, where, on the basis of said signal, both the presence of a cow can be recorded and the cow in question can be individualized. The calculating unit 36 incorporates an algorithm whereby it can be recorded for each of the lying boxes 2 (L₁-L₁₆) whether a cow is present in the lying box at any moment, whether and at which moment this cow laid down therein, during what time the cow is present in the relevant lying box and which cow is concerned. However, other parameters can also be recorded, is so desired, for instance movements of the cow into and out of the lying box, movements within the lying box and the like. The movements within the lying box are in particular detectable by the movement detection means 44, 46 and 48, 50.

The algorithm in the calculating unit 36 can, for instance, be set for reading out the sixteen antennae at a frequency of three times per minute, by switching them on and off one by one and, in that period, reading out and recording in a memory the animal number of the relevant cow which may be present in the relevant lying box 2, as well as the status of the movement detection means. For that matter, it is preferred that each cow be provided with an additional (second) transponder 56A, arranged in a position at right angles below a transponder already present in a neck transponder 52, as shown in Fig. 6. Thus, the recognition of the cow by means of transponders 56, 56A and antenna 24 is improved even further, because the directional dependence is reduced thereby.

Depending on the position of the cow in the lying box 2, the position of the transponders 56, 56A will vary substantially relative to the magnetic field generated by the antenna 24. By means of the light sources/sensors 44, 48 and the associated reflectors 46, 50, the recognition of the cows can even be further improved. For these movement detection means 44-50, it is assumed that they provide a pulse when the light beam is interrupted. In this specification, this pulse is denoted by a "1" as in a binary system. When the light beam is transmitted and reflected without interruption, this is denoted by a "0". With the upper detection means 48, 50 provided adjacent the top side of the loops 42, a "1" will be obtained only when a standing cow is present between the crush barriers 28, for instance when it enters or leaves the lying box or stands therein. The lower movement detection means 44, 46 will provide a "1" only when a cow either lies in the lying box "2", on the floor 22, or stands in the lying box, with a leg or head in front of the light source, at least in front of the sensor. From this, four situations can be derived (the first position concerns the upper movement detection means 48, 50, the second position concerns the lower movement detection means 44, 46):
- 0-0:: lying box is free;
- 1-0:: a cow stands in the lying box;
- 1-1:: a cow stands in the lying box with its leg or head in front of the lower light source 44 or reflector 46; and
- 0-1:: a cow lies in the lying box.

Since the photocells, like the antenna, are in connection with the calculating unit 36, an almost 100% reliable observation with regard to the situation in the relevant lying box 2 can be obtained. On the basis of the information thus obtained, for instance starting and end times of lying periods of cows in the relevant lying box can be marked, by means of the algorithm. Moreover, in each case, it can be registered which cow is concerned.

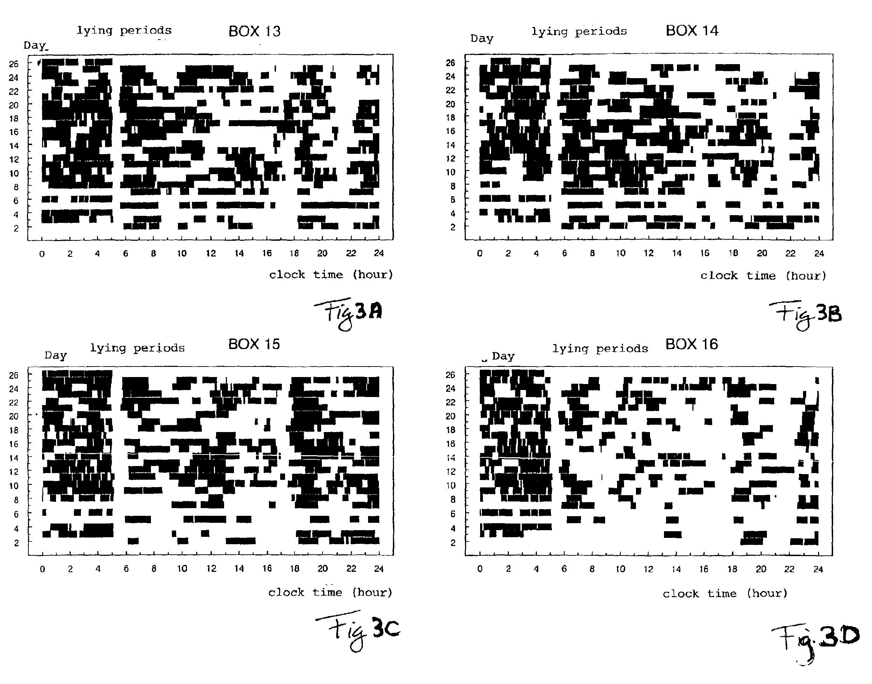

With an animal-keeping apparatus 1 according to the present invention, diagrams can for instance be established for the different lying boxes in which the occupation by lying cows of the relevant lying box can be presented, related to the moment of a day, which observation can be maintained for longer periods. Fig. 3 shows such diagrams for four lying boxes, in particular lying boxes L₁₃, L₁₄, L₁₅ and L₁₆. In Fig. 3, a period of 24 hours is plotted out horizontally, while a period of 26 days is plotted out vertically. The blocks shown in black represent a period in which a cow lies in the lying box in question. The white blocks indicate that the relevant lying box 2 is empty, or at least not used by a lying cow. As Fig. 3 clearly demonstrates, the average occupation of the lying box L₁₆ is considerably less than that of, for instance, lying box L₁₄. Only during the night, in particular between approximately eleven p.m. and five a.m., is the lying box L₁₆ relatively well-occupied, too. As appears from the diagrams, in this period, all lying boxes are presumably occupied by lying cows almost constantly, since this is a resting period. It also appears that directly after five a.m., all lying boxes are empty. This was a milking time. It will be understood that the lying box L₁₆ proves to be less popular, which may, for instance, be due to the position thereof next to the return path 18, which will involve unrest. Thus, all types of data can be derived, which data may, for instance, be used for improving the layout.

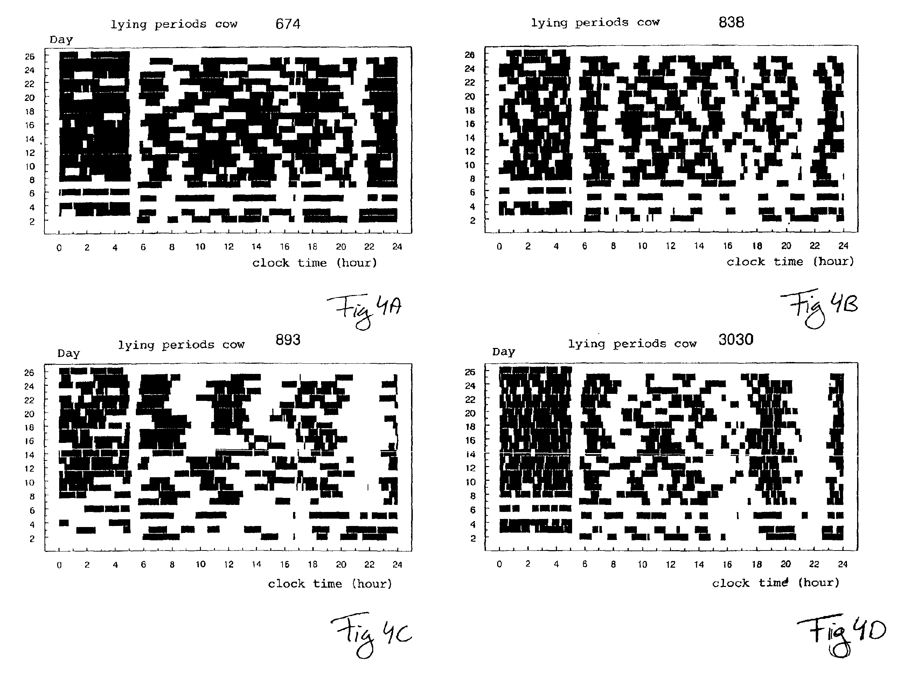

Fig. 4 shows, for four cows, the periods during which they have lain in lying boxes. Once again, the hours of a day are shown horizontally, and 26 days are shown vertically. The black blocks again indicate that the relevant cow lies in a lying box, the white blocks indicating that the cow is located elsewhere, at least in another position. These Figures clearly demonstrate that cow 893 lies relatively little, yet when it lies, it does so for relatively longer periods, while cow 674 lies much during longer periods. Cows 838 and 3030 lie in a lying box relatively often for relatively short periods. By means of such diagrams, a "lying pattern" can be established per cow, which pattern can be used as reference. When it is found that the actual "lying pattern" of the relevant cow starts to differ substantially from its own normal "lying pattern" or possibly that of other cows, this may be an indication of, for instance, a disease, unrest in the group, irregularities in feeding and milking, birth of a calf, changes in the climate of the stable, such as for instance in temperature, air humidity, light, air velocity and like or other inconveniences. This may also be an indication of heat.

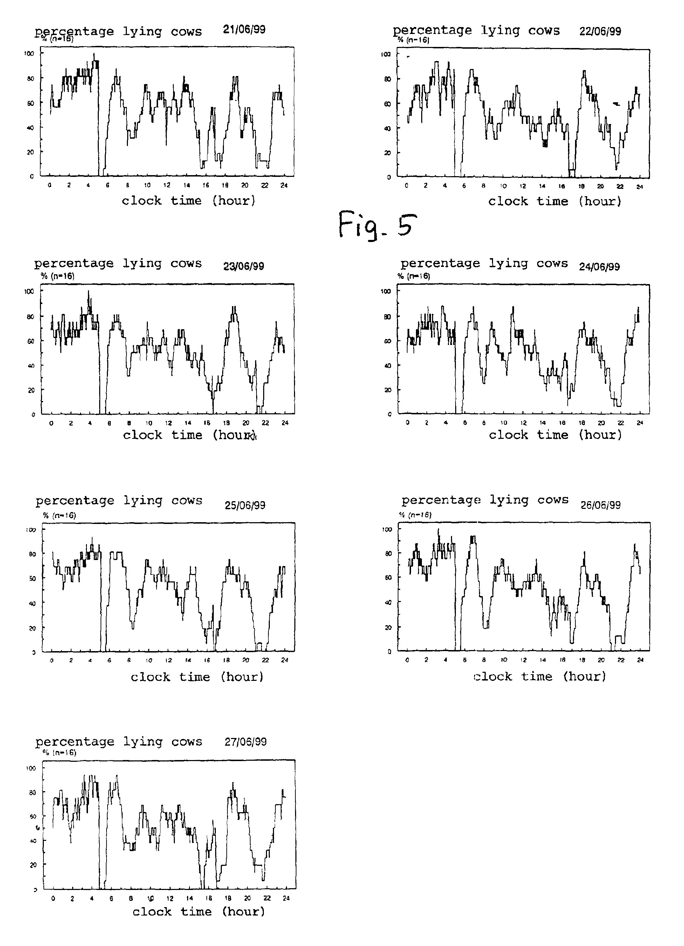

It will be understood that by means of the data to be obtained with an animal-keeping apparatus according to the invention, much information becomes available which can, for instance, also be used for improving the stable layout, for instance through repositioning of the lying boxes, while moreover, population control can for instance be realized hereby. Indeed, through a different composition of the group, social unrest can for instance be removed. Also, as shown in Fig. 5, it can be established how many cows lie at the same time, so that the rest in the group can for instance be monitored. Also, such an apparatus can easily be used for tracking down individual cows in the stable.

Fig. 6 shows an assembly which can readily be used for at least temporarily arranging an animal-keeping apparatus according to the invention, for instance for control measurements or the like. This assembly comprises a calculating unit 36, for instance in the form of a computer with a suitable algorithm, a number of sets of movement detection means 44-50 and a mat 60, for instance manufactured from a number of layers or rubber, into which an antenna 24 is incorporated. Via wires 38, the antenna 24 is connected to a coupling case 34, which can be connected to the calculating unit 36, for instance radiographically. During use, the mat 60 can easily be laid on the floor 22 of a lying box 2, while the movement detection means can be secured to crush barriers 28 or like separation means of lying boxes. Of course, they can also be coupled to the calculating unit, for instance directly or via a radiographic connection. Measurements can then be performed as described hereinabove. After use, the mat 60 together with the movement detection means 44-50 can be removed again for use elsewhere.

## Claims

1. Method for determining animal movements within an apparatus for keeping animals, wherein at least a number of animals are provided with a transmission means such as an active or passive transponder, wherein in the apparatus a number of antennae are arranged at a number of animal-keeping positions, sensitive to the transmission means, while preferably, a number of movement detection means are moreover arranged at said animal-keeping positions and the antennae and possibly the movement detection means are coupled to a calculating unit, movements of animals at least in the animal-keeping positions being registered by means of cooperating antennae and transmission means and possibly the movement detection means, while on the basis of the signals thus generated, at least movement patterns of the animals relative to the animal-keeping positions are registered.

2. A method according to claim 1, wherein movements within the animal-keeping positions are in particular registered by the movement detection means.

3. A method according to claim 1 or 2, wherein by means of at least the movements of the animals, in particular relative to the animal-keeping places, the position of the animal-keeping places relative to one another and to the further apparatus is optimized.

4. A method according to claim 3, wherein optimization is effected in such a manner that the average occupation of an animal-keeping position is approximately identical to that of the other animal-keeping positions.

5. A method according to claim 3 or 4, wherein optimization is effected in such a manner that for each animal, at least one animal-keeping position is present where the relevant animal, on average, stays more often than the other animals.

6. A method according to any one of claims 1-5, wherein other parameters are registered, such as air movements within the apparatus and lighting, wherein, through control of at least a number of said parameters, the influence thereof on movement patterns of the animals within the apparatus is determined.

7. A method for optimizing the layout of an animal-keeping apparatus, wherein during some time, in particular a number of periods of twenty-four hours, at least the movements, preferably the movements and positions of animals in an animal-keeping apparatus are registered, wherein on the basis of the results found, a rearrangement of the animal-keeping positions is implemented, such that upon repeated registration of at least the movements of the animals, the difference in average duration of occupation of the different animal-keeping positions relative to one another after the rearrangement is smaller than before the rearrangement.

8. Apparatus for keeping animals, comprising a number of animal-keeping positions, wherein the or each animal-keeping position comprises movement detection means and at least one antenna, wherein a series of transmission means are provided for coupling to animals, said transmission means being identifiable by the or each antenna.

9. Apparatus according to claim 8, wherein the transmission means are designed as, at least with a transponder, detectable by at least one and preferably each antenna when the transponder is located within the range thereof.

10. Apparatus according to claim 8 or 9, wherein the or each transmission means is individualizable, at least individualized for a specific animal and identifiable as such by the or each antenna.

11. Apparatus according to any one of claims 8-10, wherein the or each antenna is designed as a detection coil.

12. Apparatus according to any one of claims 8-11, wherein the or each antenna is connected to a calculating unit, said calculating unit comprising an algorithm for analyzing, on the basis of signals coming from the or each antenna, the behavior of animals, in particular movements and/or positions thereof in the apparatus.

13. Apparatus according to claim 12, wherein the or each antenna is wirelessly connected to the calculating unit.

14. Apparatus according to any one of claims 8-13, wherein an antenna is provided in or on the floor of each animal-keeping position.

15. Apparatus according to any one of claims 8-14, wherein at each animal-keeping position, at least one movement detection means is provided at some distance above the floor of the relevant animal-keeping position.

16. Apparatus according to claim 14, wherein at each animal-keeping position, one inlet is provided, wherein at least two movement detection means are provided, at least one of which is arranged adjacent the inlet and at least one of which is provided at a distance therefrom.

17. Apparatus according to any one of claims 8-16, wherein the animal-keeping positions are designed as at least a series of lying boxes, mutually separated by partitions, wherein in each case, at least one movement detection means is provided on a partition, such that movement of an animal within the lying box can be registered.

18. An assembly of a series of floor mats having provided therein or thereon an antenna in the form of at least one detection loop, a series of transponders for cooperation with the antennae and a calculating unit for coupling to the antennae, said assembly being arranged for determining movement patterns of animals within an animal-keeping apparatus.

19. An assembly according to claim 18, wherein there are further provided a number of movement detection means for coupling to the calculating unit.
